# EUROPÄISCHE PATENTSCHRIFT

(11) **EP 1 067 265 B1**
(45) Veröffentlichungstag und Bekanntmachung des Hinweises auf die Patenterteilung: **20.04.2005**
(21) Anmeldenummer: 00113334.7
(22) Anmeldetag: 23.06.2000
(51) Int. Cl.: E05C 9/20, E05F 7/08

(54) **Beschlagsystem für Drehkippfenster oder Drehkipptüren**
Fitting assembly for pivoting and tilting windows or doors
Ensemble de ferrure pour fenêtre ou porte pivotante et basculante

(30) Priorität: 08.07.1999 DE 19931719
(43) Veröffentlichungstag der Anmeldung: 10.01.2001
(73) Patentinhaber: Aug. Winkhaus GmbH & Co. KG, D-48291 Telgte (DE)
(72) Erfinder: Renz, Dieter, 49479 Ibbenbüren (DE); Lau, Wolfgang, 48291 Telgte (DE); Schenck, Hans-Peter, 48291 Telgte (DE)
(74) Vertreter: Hoffmeister, Helmut, Dr. Dipl.-Phys.

(56) Entgegenhaltungen:
- EP-A- 0 801 194
- EP-A- 0 863 282
- EP-A- 0 886 026
- DE-A- 19 607 366
- FR-A- 2 172 633

## Beschreibung

Die Erfindung betrifft ein Beschlagsystem für Flügelrahmen eines Drehkippfensters oder einer Drehkipptür, zum Einbau in wenigstens einen Beschlagnutabschnitt, mit wenigstens folgenden Teilen:
- wenigstens einem Betätigungs-Funktionselement,
- einer Stulpschiene, die gegenüber einem Nutgrundflächenelement in dem Beschlagnutabschnitt abgestützt ist, und
- einer Treibstange, die mit wenigstens einem Betätigungs-Funktionselement in Verbindung steht, wobei wenigstens eines der Betätigungs-Funktionelemente aus wenigstens einer Bewegungsausnehmung der Stulpschiene herausragt und mit der Treibstange bewegbar verbunden ist.

Ein Treibstangenbeschlag für Fenster, Türen zum Einbau in eine Beschlagnut ist aus der DE 295 14 640 U1 bekannt. Er besteht aus mindestens zwei aneinander anzuschließenden Baugruppen, die jeweils eine Stulpschiene als Führungselement und eine Treibstange aufweisen. Die Stulpschiene ist über einen Lagerbock in einen Nutengrund der Beschlagnut abgestützt. Der mit einer Durchtrittsöffnung versehene Lagerbock ist durch die Stulpschiene mit einem Befestigungsmittel festlegbar. Die Treibstange umgreift mit einem Führungsschlitz den Lagerbock, wodurch die Längsbeweglichkeit der Treibstange gegenüber der Stulpschiene auf einen bestimmten Hub beschränkt ist.

Nachteilig ist, daß die Treibstange gegenüber der Stulpschiene zeitweise festgelegt werden muß. Hierzu muß ein Festlegungselement eingesetzt werden, das mit dem Lagerbock zerstörbar verbunden ist.

Aus der DE-OS 22 42 305 ist ein Bauteilsystem für Treibstangenbeschläge bekannt, mit dem ein Flügelrahmen eines Drehkippfensters beschlagen wird. Auf die Ecken des Flügelrahmens werden Eckumlenkungen und zwischen ihnen ein Verschlußbeschlag montiert, der sich aus einem Betätigungsgetriebe, einem Kupplungsschieber sowie zwei Riegelschiebern zusammensetzt. An einer der Schmalseiten des Flügelrahmens ist eine Ausstellvorrichtung aufgesetzt. Der Verschlußbeschlag, die Eckumlenkungen und die Ausstellvorrichtung sind jeweils durch Treibstangenstücke verbunden, die an ihren Enden Kupplungselemente aufweisen. Die Kupplungselemente werden durch Zapfen gebildet, die an der Unterseite von mit den Bauteilen einstückig hergestellten Endlappen sitzen.

Um bei diesem Bauteilsystem den Schieber derart auszugestalten, daß er auch bei dem Anwendungsfall der gegenläufig in den Führungskanal einzuschiebenden Beschlagteile anwendbar ist unter Beibehaltung eines gemeinsamen Einhängeablaufes, ist es aus der DE 195 06 106 C2 bekannt, den Schieber mit einer den Kupplungszapfen teilenden Sollbruchstelle zu versehen.

Zwar kann der Schieber jetzt für unterschiedlichste Einsatzfälle genutzt werden. Eine Montage der Teile des Treibstangenbeschlages muß nach wie vor über dem Nutengrund der Beschlagnut vorgenommen werden.

Aus der DE 196 07 366 A1 ist ein Treibstangenbeschlag-Montagesatz für den Flügel eines Drehkippfensters bekannt, der identische Eckumlenkungen für beliebige Flügelecken, eine Oberschiene zum Zusammenwirken mit einer Ausstelleinrichtung, ein Treibstagenantriebselement und identische, einseitig ablängbare Verbindungseinheiten einsetzt.

Auch wenn alle Kupplungselemente und alle Kupplungsgegenelemente jeweils identisch ausgebildet und miteinander verkoppelbar sind, ist die Treibstange mit einer über ihr liegenden Stulpschiene verbunden. Die Treibstange und die Stulpschiene müssen abgestützt über dem Nutengrund der Beschlagnut und untereinander justiert festgelegt eingebaut werden.

Es stellt sich deshalb die Aufgabe, ein Beschlagsystem der eingangs genannten Art so weiter zu entwickeln, daß ein effektiverer Aufbau ermöglicht und der Montageaufwand weiter gesenkt wird.

Erfindungsgemäß wird diese Aufgabe bei einem Beschlagsystem durch die kennzeichnenden Merkmale des Anspruchs 1 gelöst.

Die mit der Erfindung erzielten Vorteile bestehen insbesondere darin, daß durch die Aufteilung der Treibstange und der Stulpschiene eine vorjustierte und zeitweilige Festlegung zwischen ihnen nicht mehr erforderlich ist. Hierdurch wird der Zeitaufwand für die Vormontage der Treibstange und der Stulpschiene vermieden. Darüber hinaus unterscheidet sich das Beschlagsystem und seine Beschlagteile, wie Stulpeneinsatzkörper und Treibstangenkoppelkörper, von den herkömmlichen dadurch, daß die geteilte Treibstange überwiegend und teilweise unter der geteilten Stulpschiene verläuft. Die Antriebselemente sorgen auf einfache Art und Weise dafür, daß eine mechanische Kupplung zwischen Stulpenprofilen bzw. Kuppelstulpenprofilen und weiteren Betätigungs- und Funktionselementen hergestellt werden kann.

Auf dem Trägerschienenprofil können beabstandet untereinander zwei Verbindungselemente und zwischen diesen dann ein Funktionselement angeordnet sein. Jedes Verbindungselement und das Funktionselement sind jeweils in einer Stulpenschienenbewegungsausnehmung zu bewegen, die in dem Stulpschienenprofil eingebracht sein können. Durch die Bewegung der Verbindungselemente und des Funktionselements in jeweils einer Stulpenschienenbewegungsausnehmung wird eine freie und gezielte und vor allem eine Bewegung dieser Teile in einem vorbestimmten gleichen Hub gesichert.

Auf dem Koppeltreibstangenprofil können beabstandet zwei Verbindungselemente angeordnet sein. Diese können in einer Koppelstulpenausnehmung zu bewegen sein. Diese eine Koppelstulpenausnehmung kann ebenfalls für einen festgelegten Hub der beiden untereinander beabstandeten Verbindungselemente sorgen, wobei dieser Hub dem Hub der Verbindungselemente und des Funktionselements in dem Stulpschienenprofil entsprechen können.

Das Antriebsstangenelement kann mit wenigstens einer Eckumlenkung als ein zusätzliches Betätigungs-Funktionselement verbunden sein, das wenigstens ein weiteres Verbindungselement aufweisen kann. Die Verbindungselemente der Eckumlenkungen können durch die Riegelvorsprünge der Eckumlenkungen realisiert werden. Hierdurch ist eine einfache Verbindung mit Hilfe der Antriebselemente gegeben.

Das Stulpschienenprofil kann mit wenigstens einem Befestigungselement und der Koppelstulpenschienenkörper wenigstens mit einem Koppelbefestigungselement befestigt werden. Hierdurch ist eine einfache Befestigung auf dem Nutengrund möglich.

Die Befestigungselemente können in einem Befestigungsabstand und die Koppelbefestigungselemente zu einem Koppelbefestigungsabstand angeordnet sein. Der Befestigungsabstand und der Koppelbefestigungsabstand können gleich oder unterschiedlich ausgebildet sein. Hierdurch läßt sich eine montageautomatenunterstützte Anbringung am Flügelrahmen realisieren.

An den Enden eines Stulpschienenprofils kann jeweils ein Abstandsprofil angeordnet sein, an dem ein parallel zum Stulpschienenprofil verlaufendes Befestigungselement angeordnet sein kann. Hierdurch wird ein lagegenauer Einsatz in dem Beschlagnutabschnitt des Flügelrahmens gesichert.

Die Abstandsprofile können gegenüber dem ersten Stulpenschienenkörper abgewinkelt angeordnet sein. Der Winkel kann hierbei zwischen 20 und 90°, vorzugsweise 45°, betragen.

Zu einem als Stulpschienenprofilkörper ausgebildeten Stulpschienenprofil kann parallel verlaufend ein Kastenbodenprofil angeordnet und mit zwei sich gegenüberliegenden Abstandskastenelementen verbunden sein, in deren Bereich jeweils ein Befestigungselement angeordnet sein kann. Hierdurch entsteht ein kastenförmiger Stulpeneinsatzkörper, der gegenüber dem profilförmigen Stulpeneinsatzkörper robuster ist und der sich lagegenauer und sicherer in die Aufnahmenut des Flügelrahmens montieren läßt.

Der Treibstangenkoppelkörper kann ebenso wie der Stulpeneinsatzkörper profil- oder kastenförmig aufgebaut sein. Er kann die gleichen Befestigungselemente wie der Stulpeneinsatzkörper, aufweisen. Durch diese gleichartige Gestaltung der Treibstangenkoppelkörper wird ebenfalls eine lagegenauere und robustere Montage möglich.

Die Befestigungselemente können eine Befestigungsausnehmung aufweisen, die in ein an das Abstandsprofile angeordnetes Kopplungs- oder Laschenprofil oder in das Kopplungs- oder Stulpenkastendeckelelement und das Kopplungs- oder Kastenbodenprofil eingebracht sein können. Hierdurch ist eine einfache Befestigung mit Hilfe von Schrauben möglich. Als Ergänzung oder anstelle der Befestigungsausnehmungen können ein Aufsatztellerelement, wenigstens ein Aufsatzkeilelement, wenigstens ein Aufsatzzentrierelement und/oder ein Zentrierspitzenelement vorgesehen werden. Diese können an einer Unterseite des Kopplungs- und Laschenprofils oder des Kopplungs- und Kastenbodenprofils angeordnet sein. Mit Hilfe dieser Zusatzelemente kann der Stulpeneinsatzkörper bzw. der Treibstangenkoppelkörper vor dem Anschrauben lagegerecht in die Aufnahmenut eingesetzt und danach angeschraubt werden.

Als Funktionselemente können sämtliche bei bekannten Beschlagsystemen verwendete Elemente zum Einsatz kommen. So kann das Funktionselement ein Verriegelungselement, ein Pilzkopfelement, ein Auflaufstützenelement, ein Fehlschaltsperrenelement, ein Scherenelement, ein Schaltsperrenelement, ein Getriebeschloßelement sein. Durch die baugleichen Stulpeneinsatzkörper, die diese unterschiedlichen Funktionselemente tragen, ist der Anschraubvorgang als gleich anzusehen.

Die Verbindungselemente können aus einem Flachprofil hergestellt sein und einen Verbindungspilzkörper und einen sich an diesen anschließenden Verbindungsstilkörper aufweisen. Mit den Verbindungsstilkörpern können sie auf dem Treibstangenprofil- bzw. auf dem Koppeltreibstangenelement befestigt sein.

Zwischen den Stulpeneinsatzkörpern und den Eckumlenkungseinheiten können die Treibstangenkoppelkörper angeordnet sein. Hierdurch ist es möglich, die Antriebselemente zwischen den Stulpeneinsatzkörpern und den Eckumlenkungen zu unterstützen. Die von den Stulpeneinsatzkörpern ausgehenden Verschließ- und Kippbewegungen des Flügelrahmens werden so zielgerichtet und genau auf die übrigen Beschlagteile übertragen.

Die Antriebstangenelemente der Eckumlenkungen können zugleich deren Riegelvorsprünge sein. Hierdurch wird die Baulänge der Eckumlenkungen verringert.

Die Antriebselemente können Seile, Ketten, Zahnriemen oder Treibstangenelemente sein. Hierdurch wird eine individuelle Bewegungsübertragung gewährleistet.

Die Treibstangenelmente können ausgebildet sein als
- ein Langantriebsprofilelement, in dem in einem Verbindungskörperabstand mehrere Verbindungskörperausnehmungen eingebracht sind,
- ein Kurzantriebsprofilelement, in dem in dem Verbindungskörperabstand zwei Verbindungskörperausnehmungen eingebracht sind,
- ein Adapterprofilelement, in dem in einem Adapterabstand eine Verbindungskörperausnehmung und eine Riegelvorsprungsausnehmung angeordnet sein können,
- ein Eckumklenkungsantriebsprofil, in dem in einem Riegelkörperabstand zwei Riegelvorsprungsausnehmungen angeordnet sein können.

Die Längen der unterschiedlichen Treibstangenelemente sowie die Abstände der Ausnehmungen können für baugleiche Flügelrahmen vor dem Aufsetzen der Treibstangenelemente vorgefertigt werden, so daß die Treibstangenelemente nur noch auf die montierten Beschlagteile aufgesetzt werden brauchen.

Ausführungsbeispiele der Erfindung sind in der Zeichnung dargestellt und werden im folgenden näher beschrieben. Es zeigen in schematischer Darstellung:
- Fig. 1: ein Beschlagsystem für eine automatengestützte Montage für einen Flügelrahmen eines Drehkippfensters,
- Fig. 2a: eine Draufsicht auf eine erste Ausführungsform eines Stulpeneinsatzkörpers für ein Beschlagsystem gemäß Fig. 1,
- Fig. 2b: einen Schnitt durch einen Stulpeneinsatzkörper gemäß Fig. 2a entlang der Linie IIB-IIB,
- Fig. 2c: eine Seitenansicht eines Stulpeneinsatzkörpers gemäß Fig. 2a,
- Fig. 3a: einen Schnitt durch eine zweite Ausführungsform eines Stulpeneinsatzkörpers für ein Beschlagsystem gemäß Fig. 1,
- Fig. 3b: eine Seitenansicht eines Stulpeneinsatzkörpers gemäß Fig. 3a,
- Fig. 4: einen Querschnitt eines Flügelrahmens mit einem montierten Stulpeneinsatzkörpers gemäß Fig. 2a bis Fig. 2c bzw. Fig. 3a und 3b,
- Fig. 5: eine Prinzipskizze zu einem in einer Aufnahmenut eines Flügelrahmens eingesetzten Stulpenkörpers gemäß Fig. 4
- Fig. 6: bis 8 verschiedene Befestigungselemente für Stulpeneinsatzkörper gemäß den Fig. 2a bis 2c bzw. 3a und 3b,
- Fig. 9a: bis 9g eine Teilansicht verschiedener Ausführungsformen von Funktionselementen für einen Stulpeneinsatzkörper gemäß den Fig. 2a bis 2c bzw. 3a und 3b,
- Fig. 10a: und 10b eine Seitenansicht verschiedener Eckumlenkungen für einen Treibstangenbeschlag gemäß Fig. 1,
- Fig. 11: einen Schnitt durch einen Treibstangenkoppelkörper für ein Beschlagsystem gemäß Fig. 1,
- Fig. 12a: bis 12d eine Draufsicht auf verschiedene Ausführungsformen von Treibstangenelementen für ein Treibstangenbeschlag gemäß Fig. 1 und
- Fig. 13: und 14 eine Montage eines Treibstangenbeschlags gemäß den Fig. 1 bis 12d an einem Flügelrahmen mit Hilfe eines Montageautomaten.

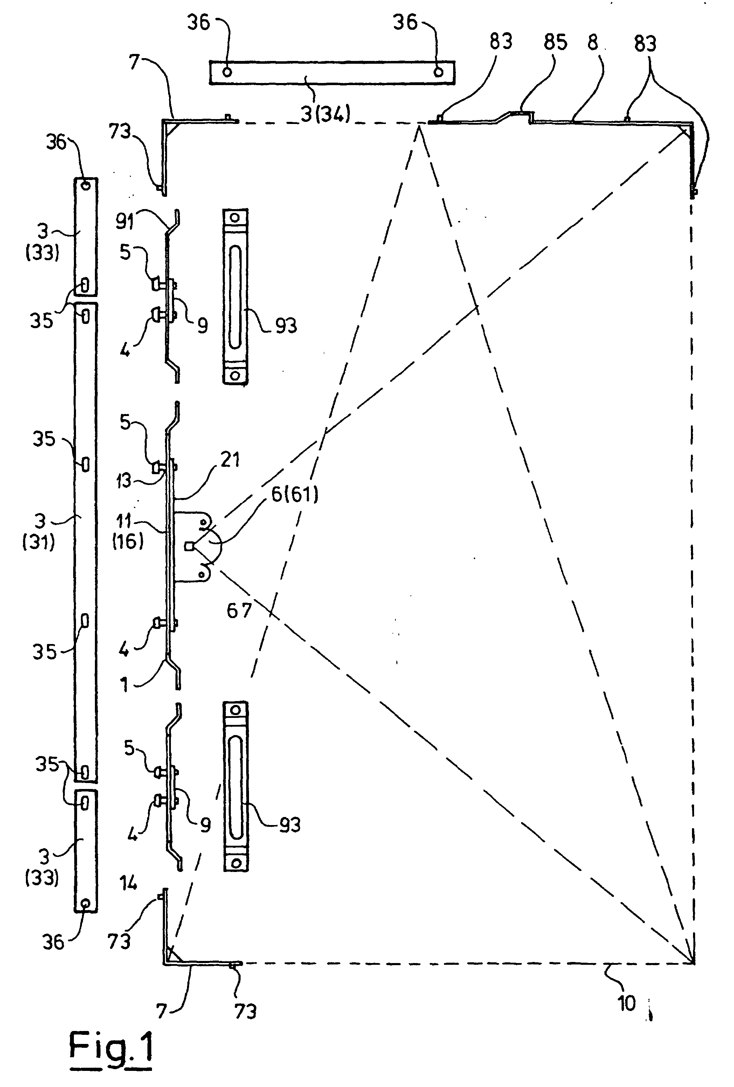

Ein Beschlagsystem für eine Montage an einem Flügelrahmen 10 eines Drehkippfensters oder einer Drehkipptür ist in Fig. 1 schematisch dargestellt.

Das Beschlagsystem besteht aus
- einem Stulpeneinsatzkörper 1 mit einem Funktionselement 6,
- Eckumlenkungseinheiten 7,
- einer Oberschienen-Eckumlenkungseinheit 8,
- Treibstangenkopplungskörpern 9 und
- Antriebsstangenelementen 3,
mit denen der Stulpeneinsatzkörper 1, die Eckumlenkungseinheiten 7, die Oberschienen-Eckumlenkungseinheit 8 und die Treibstangenkoppelkörper 9 verbunden werden.

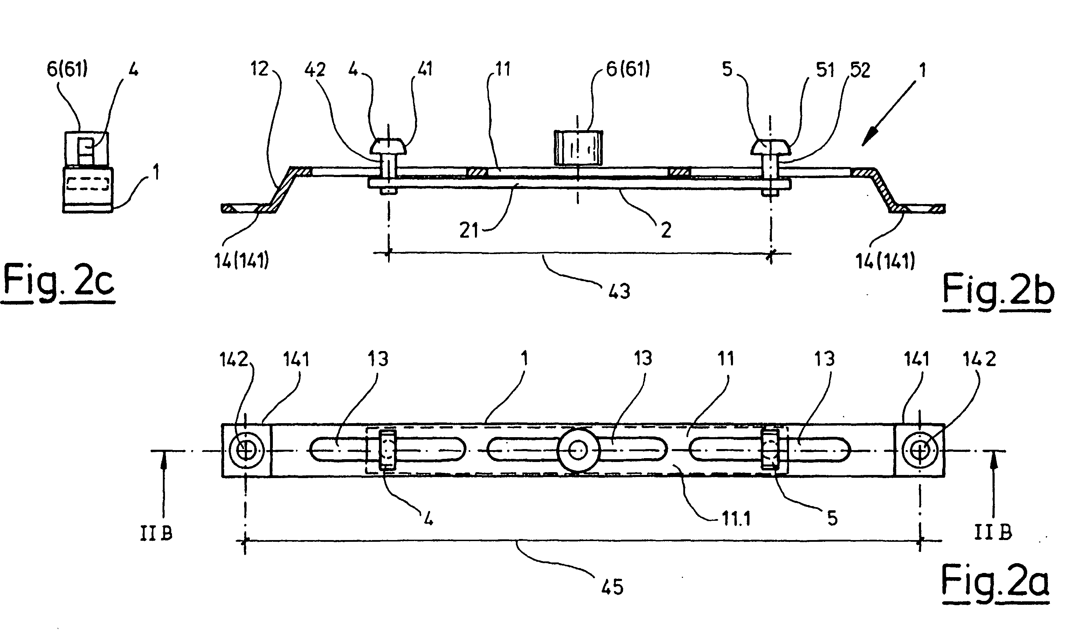

Wichtigstes Teil des Beschlagsystems ist der Stulpeneinsatzkörper 1, dessen profilförmige Ausbildung detailliert in den Fig. 2a bis 2c gezeigt ist. Er weist ein Stulpschienenprofil 11 auf, an dessen beiden Seiten abgewinkelt je ein Abstandsprofilelement 12 angeordnet ist. Die Abstandsprofilabschnitt 12 können in einem Winkel zwischen 20 und 90°, vorzugsweise 45° abgewinkelt sein. An jeden Abstandsprofilabschnitt 12 schließt sich ein Befestigungselement 14 an. Das Befestigungselement 14 besteht aus einem Befestigungsprofilabschnitt 141, in dem eine Befestigungsausnehmung 142 eingebracht ist. Die beiden Befestigungsausnehmungen 142 sind in einem Befestigungsabstand 45 angeordnet. Wesentlich ist, daß dieser Befestigungsabstand bei allen Stulpeneinsatzkörpern 1 gleich lang ausgebildet ist.

In das Stulpschienenprofil 11 des Stulpeneinsatzkörpers 1 sind drei in Längsrichtung untereinander beabstandete Stulpenbewegungsausnehmungen 13 angebracht. Die Stulpenbewegungsausnehmungen sind als Langlochausnehmungen ausgebildet.

Unterhalb des Stulpschienenprofils 11 befindet sich ein Trägerschienenprofil 21. Auf dem Trägerschienenprofil 21 sind in einem Funktionskörperabstand 43 zwei Verindungselemente 4, 5 angeordnet. Sie sind aus einem Flachmaterial hergestellt und weisen einen Verbindungspilzkörper 41, 51 auf, an den sich ein Verbindungsstielkörper 42, 52 anschließt. Mit dem Verbindungsstielkörper 42, 52 sind die Verbindungselemente 4, 5 auf dem Trägerschienenprofil 21 befestigt. Zur Verdeutlichung sind die Treibstangenverbindungselemente in den Fig. 2a und 2b jeweils um 90° gedreht dargestellt.

Zwischen den beiden Verbindungselementen 4, 5 ist ein Funktionselement 6 so angeordnet, daß das Trägerschienenprofil 21 in einem gleichen Abstand unter dem Stulpschienenprofil 11 geführt werden kann. Bei dem Hin- und Herschieben des Treibstangenprofils 21 werden die Verbindungsstielkörper 42, 52 in den beiden gegenüberliegenden Stulpenbewegungsausnehmungen 13 hin und her bewegt, so daß der Verbindungspilzkörper 41, 51 über dem Stulpschienenprofil 11 bewegbar ist.

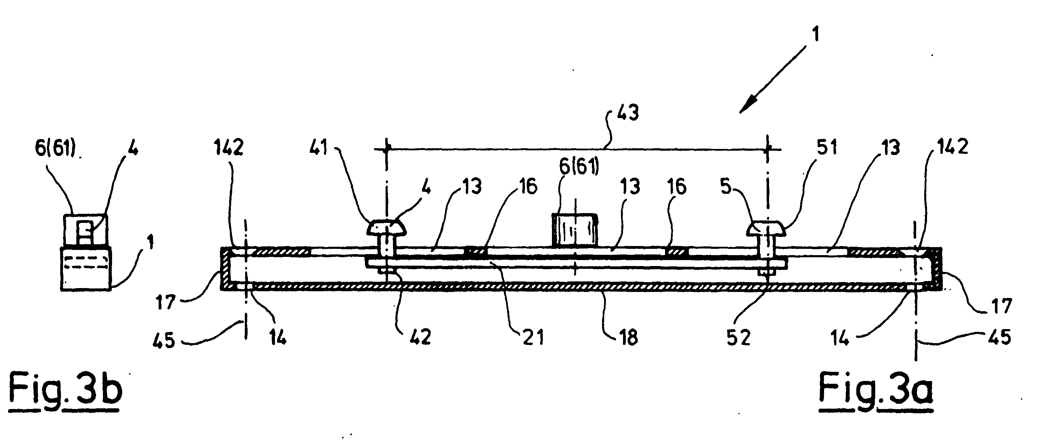

Eine andere, mehr kastenförmige Ausbildung des Stulpenprofilelements 1 ist in Fig. 3a und 3b gezeigt.

Hier liegt unterhalb eines Stulpenschienenprofils 16 beabstandet ein Kastenbodenprofil 18. Das Stulpschienenprofil 16 und das Kastenbodenprofil 17 sind durch Abstandskastenseitenelemente 17 verbunden.

Unterhalb des Stulpschienenprofils 16 befindet sich das Trägerschienenprofil 21, an dem, wie bereits beschrieben, die zwei sich gegenüberliegenden Treibstangenverbindungselemente 4, 5 und dazwischen das Funktionselement 6 angeordnet sind. In das Stulpschienenprofil 16 sind ebenso wie in das Stulpschienenprofil 11 die drei Stulpenbewegungsausnehmungen 13 in gleicher Form eingebracht.

In das Stulpschienenprofil 16 und das Kastenbodenprofilelement 18 sind in dem bereits erwähnten Funktionskörperabstand 43 die Befestigungselemente 14 unter Verwendung von Befestigungsausnehmungen 142 eingebracht.

Ein Vergleich der Figuren 2 und 3 macht deutlich, daß bis auf den Unterbau beide Ausführungsformen der Stulpeneinsatzkörper 1 gleich sind.

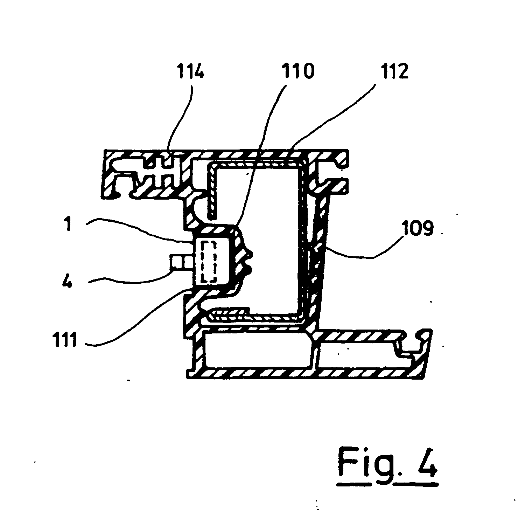

In Fig. 4 ist ein Rahmenprofil 114 mit einem Stulpeneinsatzkörner 1 gemäß den Fig. 2a bis 2c bzw. 3a und 3b in einer Aufnahmenut 110 des Rahmenprofils 114 dargestellt. Das Rahmenprofil 114 besteht aus einem Kunststoffrahmenprofil 109, das eine umlaufende Aufnahmenut 110 aufweist, an die sich eine Rahmenfalzumfangsfläche 111 anschließt. In dem Kunststoffrahmenprofil 109 ist ein Stahlprofil 112 angeordnet, das für die notwendigen Trageigenschaften und die Bewegungssteifigkeit des Rahmenprofils 114 sorgt.

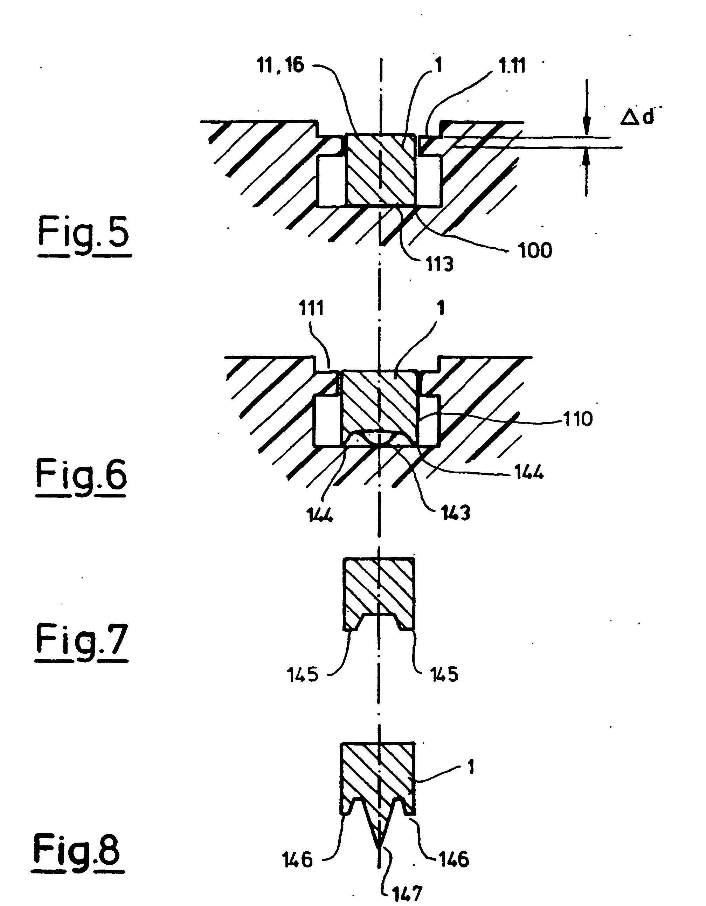

In Fig. 5 ist die Einbausituation des Stulpeneinsatzkörpers 1 in der Aufnahmenut 110 gemäß Fig. 4 schematisch gezeigt. Hierbei wird deutlich, daß die Befestigungselemente 14 auf einem Nutgrundflächenelement 113 der Aufnahmenut 110 glatt aufliegen. Deutlich wird darüber hinaus, daß die oberste Fläche des Stulpschienenprofils 11, 16 um eine Stulpauflagedifferenzdicke d höher liegt als die Stulpauflage herkömmlicher Treibstangenbausätze.

Um den Stulpeneinsatzkörper 1 auf dem Nutgrundflächenelement 113 besser arretieren zu können, weist, wie Fig. 6 zeigt, der Stulpeneinsatzkörper 1 ein Aufsatzteilelement 143 auf, zu dessen beiden Seiten ein Aufsatzkeilelement 144 angeordnet ist.

Wie Fig. 7 zeigt, können am Stulpeneinsatzkörper 1 auch Aufsatzzentrierelemente 145 angeordnet sein.

Eine weitere Ausführungsform von Zentrierelementen zeigt Fig. 8. Hierbei sind an den Stulpeneinsatzkörper 1 zwei sich gegenüberliegende Aufsatzzentrierelemente 146 und dazwischen ein Zentrierspitzenprofilelement 147 angeordnet.

Die Zusatzelemente 143 bis 147 sind vorzugsweise an den Befestigungsprofilabschnitten 141 bzw. am Kastenbodenprofilelement 18 angeordnet und dienen der Zentrierung und Führung der einzusetzen Stulpeneinsatzkörper 1 im Rahmenprofil.

Das Funktionselement 6 kann unterschiedlich ausgebildet werden.

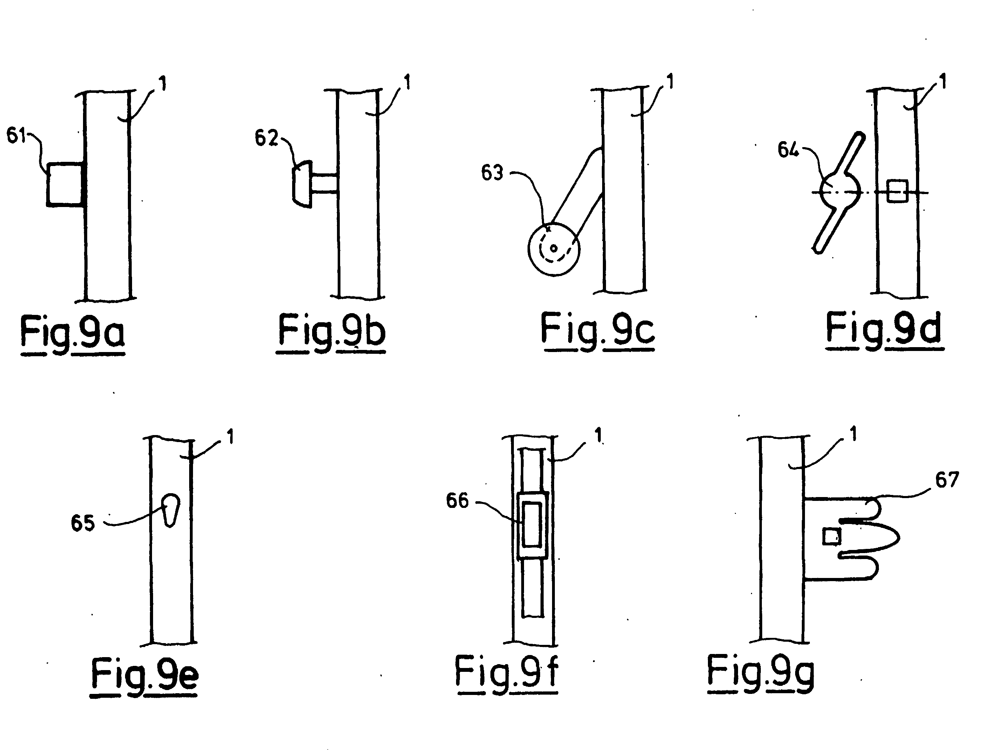

Gemäß Fig. 9a kann das Funktionselement 6 ein Verriegelungselement 61 sein, das auch unter dem Namen Rastexzenter oder Kolben bekannt ist.

Gemäß Fig. 9b kann das Funktionselement 6 ein Pilzkopfelement sein, das auch unter der Bezeichnung Schließzapfen bekannt ist.

Gemäß Fig. 9c kann das Funktionselement ein Auflaufstützenelement 63 sein, das einen Hebelarm mit einem sich daran befindlichen beweglichen Radelement aufweist.

Gemäß Fig. 9d kann das Funktionselement ein Fehlschaltsperrenelement 64 sein.

Gemäß Fig. 9e kann das Funktionselement ein Scherenelement 65 sein, mit Hilfe dessen der Flügelrahmen 10 angekippt werden kann.

Gemäß Fig. 9f kann das Funktionselement ein Schaltsperrenelement 66 sein.

Gemäß Fig. 9g kann das Funktionselement ein Getriebeschloßelement 67 sein. Es verfügt über ein nicht dargestelltes Antriebselement in Form eines Ritzels, das innerhalb des Stulpeneinsatzkörpers 1 zur Hin- und Her-Bewegung antreibbar angeordnet ist. Der Antrieb erfolgt entweder über einen Handgriff, dessen Vierkantwelle in das Ritzel einzuschieben ist oder über einen Antriebsmotor, insbesondere Elektromotor.

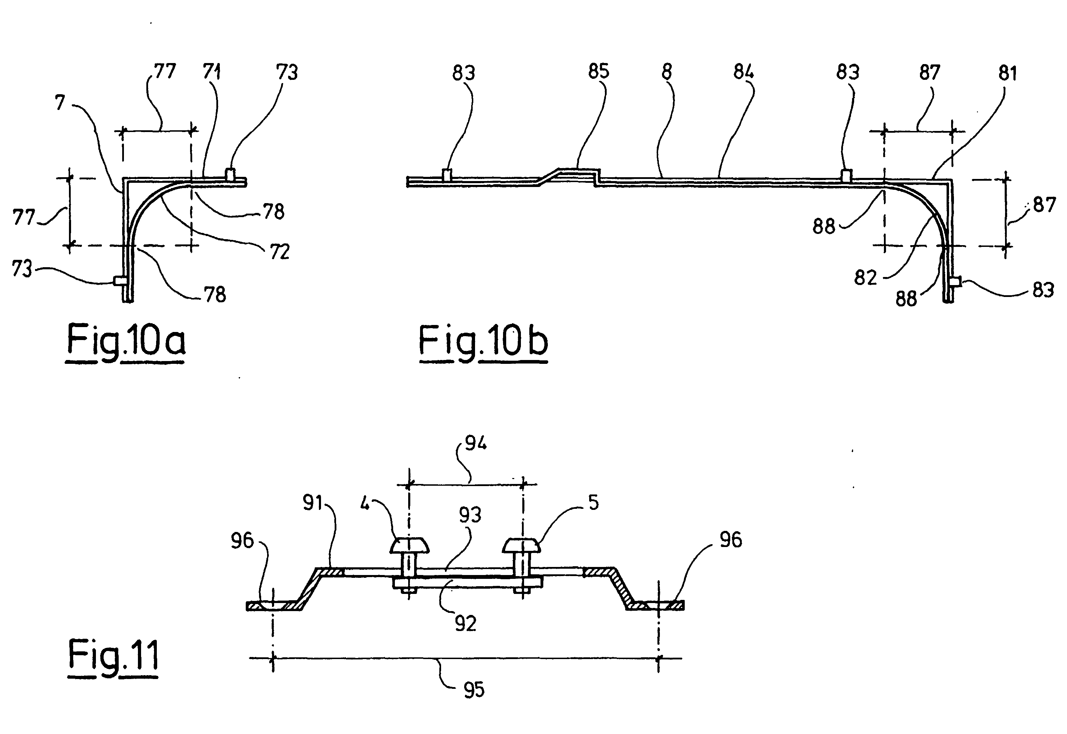

In Fig. 10a ist eine Eckumlenkungseinheit 7 dargestellt. Ihr grundsätzlicher Aufbau entspricht den Eckumlenkungen gemäß der DE 44 17 842 A1. Sie weist einen ortsfesten Eckwinkel 71 mit gleichlangen Schenkeln sowie ein Kraft übertragendes Treibelement 72 auf. Jede Eckumlenkungseinheit 7 trägt an beiden Schenkeln jeweils einen Riegelvorsprung 73, der zugleich die Funktion eines Treibstangenverbindungselements übernimmt. In einem gleichen Eckenbefestigungsabstand von der Ecke des Eckwinkels 71 sind zwei Eckbefestigungselemente 78 als Befestigungsausnehmungen eingebracht.

In Fig. 10b ist eine Oberschienen-Eckumlenkungseinheit 8 dargestellt, die ähnlich wie die Eckumlenkungseinheit 7 aufgebaut ist. Sie weist einen Eckwinkel 81 mit gleichlangen Schenkeln auf, in die ebenfalls in einem Eckbefestigungsabstand 87 zwei Eckbefestigungselemente 88 in Form von Schraubausnehmungen eingebracht sind. Unterhalb des Eckwinkels ist ein Kraft übertragendes Treibelement 82 angebracht, das mit Riegelvorsprüngen 83 versehen ist, die ebenfalls zugleich die Aufgabe der Treibstangenverbindungselemente übernehmen. Im Gegensatz zur Eckumlenkungseinheit 7 ist einer der Schenkel des Eckwinkels 81 um eine Oberschiene 84 mit einer Ausprägung 85 verlängert, hinter der ein weiterer Riegelvorsprung 83 angeordnet ist. Der Vorteil der Oberschienen-Eckumlenkungseinheit 8 liegt daran, daß mit einem Befestigungsvorgang zwei unterschiedliche Treibstangenbeschläge angeschraubt werden können. Anstelle der Oberschienen-Eckumlenkungseinheit 8 können selbstverständlich baugleiche Eckumlenkungseinheiten 7 eingesetzt werden, die dann um die entsprechend ausgebildete Oberschiene 8 ergänzt werden müssen.

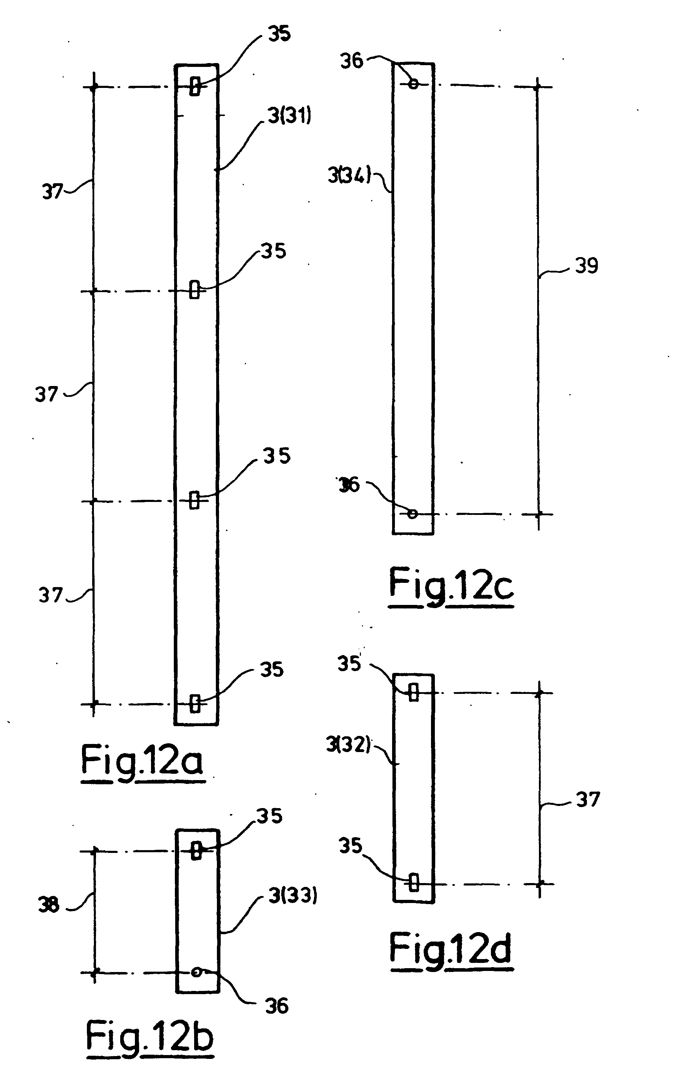

In Fig. 11 ist ein Mittelabschnitt eines Treibstangenkoppelkörpers 9 gezeigt. Er ist ähnlich wie der Stulpeneinsatzkörper 1, d. h. profilartig oder kastenförmig ausgebildet. Der Treibstangenkoppelkörper 9 weist ein Koppelstulpschienenprofil 91 auf, in den eine einzige Koppelstulpenbewegungsausnehmung 93 als Langloch eingebracht ist. Unter dem Koppelstulpschienenprofil 91 ist beweglich ein Koppelträgerschienenprofil 92 angeordnet, auf dem in einem Koppelkörperabstand 94 die bereits beschriebenen Verbindungselemente 4, 5 angeordnet sind. Die beiden Verbindungselemente 4, 5 können sich hier in einer Koppelstulpenbewegungsausnehmung 93 hinund herbewegen. Wie Fig. 1 zeigt, ist die Koppelstulpenbewegungsausnehmung 93 länger als die Stulpenbewegungsausnehmungen 13 ausgebildet, um das Treibstangengestänge so bewegen zu können, daß der Flügelrahmen 10 des Fensters entweder gedreht oder gekippt werden kann.

Der Treibstangenkoppelkörper 9 weist Koppelbefestigungselemente 96 mit einer Befestigungsausnehmung auf, die entweder in die Kasten- oder die Laschenprofilelemente eingebracht werden kann. Diese Elemente sind ähnlich wie beim Stulpeneinsatzkörper 1 ausgebildet. Die Koppelbefestigungselemente 96 sind in einem Koppelbefestigungsabstand 95 angeordnet, der, wie Fig. 1 zeigt, geringer ist als der Befestigungsabstand der Stulpeneinsatzkörper 1.

Unterschiedliche Ausbildungsformen der Antriebsstangenelemente 3 sind in den Fig. 12a bis 12d (vgl. auch Fig. 1) dargestellt.

Fig. 12a zeigt ein Langantriebsprofil 31. In das Langantriebsprofil 31 sind in gleichen Verbindungskörperabständen 37 jeweils rechteckig ausgebildete Verbindungskörperausnehmungen 35 eingebracht. Ihre Abmessungen sind so, daß sie sich in die Treibstangenverbindungselemente 4, 5 mühelos eindrücken lassen.

In Fig. 12b ist ein Adapterprofil 33 gezeigt. In einem Adapterabstand 38 ist die rechteckige Verbindungskörperausnehmung 35 und eine runde Riegelvorsprungsausnehmung 36 eingebracht. Die Riegelvorsprungsausnehmung 36 ist so ausgebildet, daß sie auf die Riegelvorsprünge 73, 83 der Eckumlenkungen 7, 8 aufzudrücken ist.

In Fig. 12c ist ein Eckumlenkungsantriebsprofil 34 gezeigt, in das in einem Riegelkörperabstand 39 sich gegenüberliegend zwei runde Riegelvorsprungsausnehmungen 36 eingebracht sind.

In Fig. 12d ist ein Kurzantriebsprofil 32 gezeigt, in das in dem Verbindungskörperabstand 37 sich gegenüberliegend zwei rechteckige Verbindungskörperausnehmungen 35 eingebracht sind.

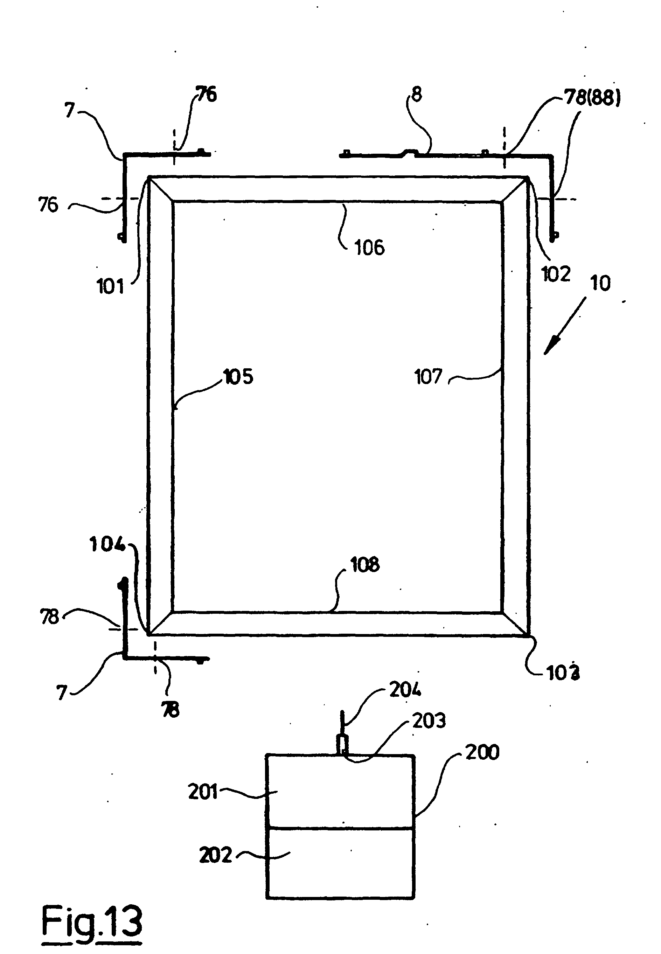

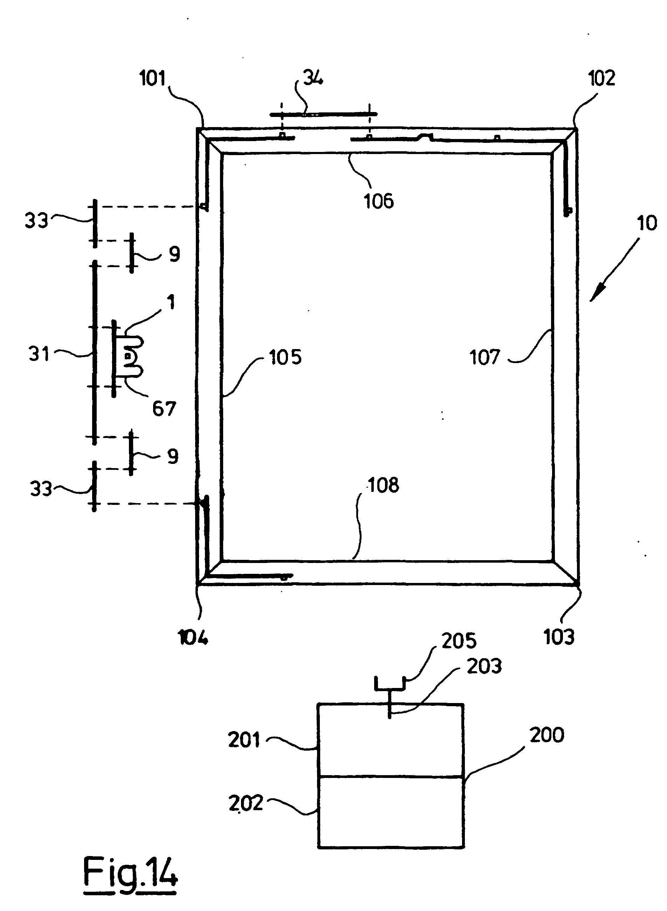

Die Montage des in den Fig. 1 bis 12d beschriebenen Beschlagsystem-Systems wird unter Hinzuziehung der Fig. 13 und 14 beschrieben.

In den Fig. 13 und 14 ist der bereits erwähnte Flügelrahmen 10 mit dem in Fig. 4 dargestellten Rahmenprofil 114 gezeigt.

Der Flügelrahmen 10 besteht aus vier durchgehenden Rahmenschenkeln 105, 106, 107 und 108, die jeweils in Rahmenecken 101, 102, 103, 104 zusammenstoßen.

Die Teilung der Treibstange und der Stulpschiene, ihre veränderte Anordnung zueinander und die nicht mehr notwendige vorjustierte Festlegung beider Teile für die Montage sowie die einheitliche Gestaltung der Stulpeneinsatzkörper 1 und der übrigen Teile des Beschlagsystems ermöglicht die Montage mit Hilfe eines Montageautomaten 200, der aus einem Montageroboterabschnitt 201 und einem sich daran anschließenden Montagemagazinabschnitt 202 besteht. Der Montageroboterabschnitt 201 trägt ein Montagewerkzeug. Das Montagewerkzeug 203 weist, wie Fig. 13 zeigt, entweder ein Ein-Schraubendreherwerkzeug 204 oder wie in Fig. 14 gezeigt ein Zwei-Schraubendreherwerkzeug 205 auf. Der Abstand zwischen den beiden Schraubendrehern des Schraubendreherwerkzeugs 205 läßt sich automatisch in den Befestigungsabstand 45 oder den Koppelbefestigungsabstand 95 verstellen. Die Verstellung in die einzelnen Befestigungsabstände erübrigt sich, wenn das Ein-Schraubendreherwerkzeug 204 jeweils eine entsprechende Weglänge zurücklegt, der den Befestigungsabständen 45, 95 bzw. Eckenbefestigungsabstand 77 der Eckumlenkungseinheiten 7 bzw. der Oberschienen-Eckumlenkungseinheit 7 entspricht.

Beschlagen wird der Flügelrahmen 10 mit dem Beschlagsystem, wie er in Fig. 1 gezeigt ist.

Begonnen wird, wie Fig. 13 zeigt, mit dem Anschrauben der beiden baugleichen Eckumlenkungseinheiten 7 zuerst an der Rahmenecke 104 und danach an der Rahmenecke 101. Hierbei werden die Eckumlenkungseinheiten 7 aus dem Montagemagazin herausgenommen und in die Aufnahmenut 110 der Rahmenschenkel 105 und 108 sowie 105 und 106 gedrückt. Anschließend werden mit Hilfe des Montagewerkzeugs 203 die Schrauben in die Befestigungsausnehmungen der Eckbefestigungselemente 78 geschraubt.

Sind die beiden Eckumlenkungseinheiten 7 angeschraubt, wird die Oberschienen-Eckumlenkungseinheit 8 aus dem Beschlagmagazin 202 herausgenommen und auf die Rahmenecke 102 aufgesetzt. Das Einschrauben der in der Aufnahmenut 110 eingesetzten Oberschienen-Eckumlenkungseinheit 8 vollzieht sich für den Montageautomaten 200 ebenso wie das Befestigen der Eckumlenkungseinheiten 7, da die Eckbefestigungsabstände 87 identisch mit den Eckbefestigungsabständen 77 sind. Durch die gleich angeordneten Eckbefestigungselemente 78 bzw. 88 werden beide Eckumlenkungen 7, 8 vom Montageautomaten 200 beim Anschrauben an den Flügelrahmen 10 gleich behandelt. Der große Vorteil dieser Einheit besteht darin, daß zwei zu einem Beschlagelement vereinigte Beschlagteile gleichzeitig befestigt werden.

Nachdem die Eckumlenkungseinheiten 7 und die Oberschienen-Eckumlenkungseinheit 8 an dem Flügelrahmen 10 befestigt sind, wird zuerst der Stulpeneinsatzkörper 1 mit dem Getriebeschloßelement 97 als Funktionseinheit in die Aufnahmenut 110 eingesetzt. Die Zentrierelemente, wie sie in den Fig. 6 bis 8 gezeigt sind, sichern den paßgenauen Einsatz des Stulpeneinsatzkörpers 1. Danach werden dem Getriebeschloßelement 67 gegenüberliegend zwei Treibstankenkoppelkörper 9 in die Aufnahmenut 110 eingedrückt. Auch hier erleichtern die in den Fig. 6 bis 8 gezeigten Teller-, Keil-, Zentrier- und Spitzenprofilelemente 143 bis 147 das lagegenaue Einsetzen auf der Aufnahmenut 110. Sind die Stulpeneinsatzkörper 1 sowie die Treibstangenkoppelkörper 9 eingesetzt, können in die Befestigungsausnehmungen 142 Schrauben mit Hilfe des Zwei-Schraubendreherwerkzeugs 205 des Montagewerkzeugs 203 eingedreht werden. Es sei an dieser Stelle erwähnt, daß es zur Vereinfachung der Montage durch den Montageautomaten 200 möglich ist, den Koppelbefestigungsabstand 95 genauso lang auszubilden wie den Befestigungsabstand 45 der Stulpeneinsatzkörper 1.

Als letztes holt der Montageautomat 200 aus dem Montagemagazin 202 die einzelnen Antriebsstangenelemente 3. Zuerst wird das Adapterprofilelement 33 auf die Eckumlenkungseinheit 7 auf der Rahmenecke 104 und den Treibstangenkoppelkörper 9 gedrückt. Danach wird das Langantriebsprofilelement 31 auf den Stulpeneinsatzkörper 1 mit dem Getriebeschloßelement 67 und auf die an seinen beiden Seiten liegenden Treibstangenkopplungskörper 9 aufgedrückt. Die Verbindung der nächsten Eckumlenkungseinheit 7 auf der Rahmenecke 101 mit dem Treibstangenkopplungskörper 9 erfolgt wiederum mit dem Adapterprofilelement 33. Zuletzt wird mit dem Eckumlenkungsantriebsprofilelement 34 die Eckumlenkungseinheit 7 und die Oberschienen-Eckumlenkungseinheit 8 auf der Rahmenecke 102 verbunden.

Der besondere Vorteil des erfindungsgemäßen Treibstanbenbeschlags besteht darin, daß durch die Teilung der Stulpenschiene und der Treibstange sämtliche Montageschritte während des Beschlagens mit Hilfe des Montageautomaten 200 vorgenommen werden können. Von besonderem Vorteil ist, daß für sämtliche Funktionselemente ein einheitlicher Stulpeneinsatzkörper 1 zum Einsatz kommt. Lange Strecken zwischen den einzelnen Treibstangenbeschlägen werden durch die Treibstangenkopplungskörper 9 überbrückt, so daß die unterschiedlich ausgebildeten Antriebsstangenelemente 3 frei und sicher zu bewegen sind.

Wird in dem Getriebeschloßelement 67 der Fenstergriff entsprechend bewegt, ist es möglich, den Fensterflügel durch ein Drehen oder Kippen zu öffnen bzw. ihn zu verschließen.

Eine Stulpschiene, wie sie bei den traditionellen Beschlagsystemen notwendig ist, sowie besondere Justierelemente für die Anfangsstellung zwischen Stulpschiene und Treibstange bei der Montage sind nicht erforderlich. Ist allerdings eine Abdeckung der einzelnen Treibstangenelemente 2 gefordert, kann eine Abdeckschiene ähnlich einer Stulpschiene einge setzt werden.

Das Anpassen der unterschiedlichen Antriebsstangenelemente 3 an die jeweiligen Maße des Flügelrahmens 10 wird in die Vorfertigung verlagert. Die Kommissionierung der einzelnen Elemente des beschriebenen Beschlagsystems in das Beschlagmagazin erfolgt programmgestützt mit Hilfe eines Roboters oder des Beschlagautomaten 200 vor Beginn der Montage so daß sich die Aufgaben des Beschlag-Monteurs im wesentlichen nur auf Überwachungsaufgaben konzentrieren.

## Patentansprüche

1. Beschlagsystem für Flügelrahmen (10) eines Drehkippfensters oder einer Drehkipptür, zum Einbau in wenigstens einen Beschlagnutabschnitt (110), mit wenigstens folgenden Teilen:
- wenigstens einem Betätigungs-Funktionselement (4, 5, 6, 7, 8),
- einer Stulpschiene, die gegenüber einem Nutgrundflächenelement (113) in dem Beschlagnutabschnitt (110) abgestützt ist, und
- einer Treibstange, die mit wenigstens einem Betätigungs-Funktionselement (4, 5, 6, 7, 8) in Verbindung steht, wobei wenigstens eines der Betätigungs-Funktionselemente (4, 5, 6, 7, 8) aus wenigstens einer Bewegungsausnehmung der Stulpschiene herausragt und mit der Treibstange bewegbar verbunden ist,
dadurch gekennnzeichnet,
- daß die Stulpschiene ein Stulpschienenprofil (11, 16, 91) ist, in das wenigstens eine Stulpenbewegungsausnehmung (13, 93) eingebracht ist,
- daß die Treibstange besteht aus
• einer Trägerschiene (21, 92), auf der wenigstens ein Betätigungs-Funktionselement (4, 5, 6, 7, 8) angeordnet und durch die Stulpenbewegungsausnehmung (13, 93) geführt ist und auf der die unter dem Stulpschienenprofil (11, 16, 91) liegende Trägerschiene (21, 92) wenigstens teilweise gehalten ist, und
• wenigstens einem Antriebselement (3) mit wenigstens einem Kupplungselement (35, 36) und
- daß das Kupplungselement (35, 36) und das Betätigungs-Funktionselement (4, 5, 6, 7, 8) verbindbar und das Antriebselement (3) wenigstens teilweise auf das Stulpschienenprofil (11, 16, 91) legbar und sämtliche Betätigungs-Funktionselemente (4, 5, 6, 7, 8) bewegbar sind.

2. Beschlagsystem nach Anspruch 1, mit einem Stulpeneinsatzkörper (1), der wenigstens umfasst:
- das gegenüber einem Nutgrundflächenelement (113) des Beschlagnutabschnitts (110) abgestützt angeordnete Stulpschienenprofil (11, 16), in das wenigstens zwei Stulpenbewegungsausnehmungen (13) angebracht sind, und
- eine Trägerschiene (21)
• die unter dem Stulpschienenprofil (11, 16, 91) liegt und
• auf der wenigstens ein Verbindungselement (4, 5) und ein Funktionselement (6) angeordnet sind,
- wobei das Funktionselement (6) durch die erste Stulpenbewegungsausnehmung und das Verbindungselement (4, 5) durch die zweite Stulpenbewegungsausnehmung hindurch ragt und mit wenigstens einem auf dem Stulpschienenprofil (11, 16) wenigstens teilweise aufliegenden Antriebselement (3) verbindbar und mit wenigstens einem weiteren Betätigungs-Funktionselement (7, 8) bewegbar ist.

3. Beschlagsystem nach Anspruch 2, **dadurch gekennzeichnet, daß** auf der Trägerschiene (21) beabstandet ein erstes und zweites Verbindungselement (4, 5) und zwischen diesen das Funktionselement (6) angeordnet sind, die jeweils in einer von drei in das Stulpschienenprofil (11) eingebrachten Stulpschienenbewegungsausnehmungen (13) bewegbar sind.

4. Beschlagsystem nach einem der Ansprüche 1 bis 3, mit einem Treibstangenkoppelkörper (3), der wenigstens umfasst:
- ein gegenüber einem Nutgrundflächenelement (113) des Beschlagnutabschnitts (110) abgestützt angeordnetes Koppelstulpschienenprofil (91), in das eine Koppelstulpenbewegungsausnehmung (93) eingebracht ist, und
- ein Koppelträgerschienenprofil (92),
• das unter dem Koppelstulpschienenprofil (91) liegt und
• auf dem wenigstens ein Verbindungselement (4, 5) angeordnet ist,
- wobei das Verbindungselement (4, 5) durch die Koppelstulpenbewegungsausnehmung (93) hindurch ragt und mit wenigstens einem auf dem Stulpschienenprofil (91) wenigstens teilweise aufliegenden Antriebselement (3) verbindbar ist und mit wenigstens einem weiteren Betätigungs-Funktionselement (7, 8) bewegbar ist.

5. Beschlagsystem nach Anspruch 4, **dadurch gekennzeichnet, daß** auf dem Koppelträgerschienenprofil (92) beabstandet untereinander ein drittes und ein viertes Verbindungselement (4, 5) angeordnet sind, die gemeinsam in der Koppelstulpenbewegungsausnehmung (93) zu bewegen sind.

6. Beschlagsystem nach einem der Ansprüche 1 bis 5, **dadurch gekennzeichnet, daß** das Stulpschienenprofil (11) mit wenigstens einem Befestigungselement (14) und das Koppelstulpschienenprofil (91) mit wenigstens einem Koppelbefestigungselement (96) befestigbar ist.

7. Beschlagsystem nach Anspruch 6, **dadurch gekennzeichnet,**
- **daß** die Befestigungselemente (14) in einem Befestigungsabstand (45) und
- **daß** die Koppelbefestigungselemente (96) in einem Koppelbefestigungsabstand (95) angeordnet sind.

8. Beschlagsystem nach Anspruch 6 oder 7, **dadurch gekennzeichnet, daß** an den Enden des Stulpschienenprofils (11) jeweils ein Abstandsprofilabschnitt (12) angeordnet ist, an dem ein parallel zum Stulpschienenprofil (11) verlaufender Befestigungsprofilabschnitt (141) angeordnet ist.

9. Beschlagsystem nach Anspruch 8, **dadurch gekennzeichnet, daß** die Abstandsprofilabschnitte (12) gegenüber dem Stulpschienenprofil (11) abgewinkelt angeordnet sind.

10. Beschlagsystem nach einem der Ansprüche 1 bis 7, **dadurch gekennzeichnet, daß** zu dem Stulpschienenprofil (16) parallel verlaufend ein Kastenbodenprofilelement (18) angeordnet und mit zwei sich gegenüberliegenden Abstandskastenelementen (17) verbunden ist, in deren Bereich jeweils das Befestigungselement (14) angeordnet ist.

11. Beschlagsystem nach einem der Ansprüche 1 bis 10, **dadurch gekennzeichnet, daß** der Treibstangenkoppelkörper (9) und der Stulpeneinsatzkörper (1) jeweils kastenförmig mit einem Kastenboden- und einem Kopplungskastendeckelelement ausgebildet sind und die gleichen Befestigungselemente (14) aufweisen.

12. Beschlagsystem nach einem der Ansprüche 6 bis 11, **dadurch gekennzeichnet, daß** das Befestigungselement (14) eine Befestigungsausnehmung (142) ist,
• die in einen Befestigungsprofilabschnitt (141) oder
• in das Stulpschienenprofil (16) und das Kastenbodenprofilelement (18)
eingebracht ist.

13. Beschlagsystem nach einem der Ansprüche 6 bis 12, **dadurch gekennzeichnet, daß** das Befestigungselement (14)
- ein Aufsatztellerelement (143),
- wenigstens ein Aufsatzkeilelement (144),
- wenigstens ein Aufsatzzentrierelement (145, 146) und/oder
- ein Zentrierspitzenelement (147)
ist, welches an einer Unterseite des Laschenprofilelements (141) oder des Kastenbodenprofilelements (18) angeordnet ist.

14. Beschlagsystem nach einem der Ansprüche 1 bis 12, **dadurch gekennzeichnet, daß** das Funktionselement (6)
- ein Verriegelungselement (61),
- ein Pilzkopfelement (62),
- ein Auflaufstützenelement (63)
- ein Fehlschaltsperrenelement (64),
- ein Scherenelement (65),
- ein Schaltsperrenelement (66), oder
- ein Getriebeschloßelement (67) ist.

15. Beschlagsystem nach einem der Ansprüche 1 bis 14, **dadurch gekennzeichnet, daß** sämtliche Verbindungselemente (4, 5) aus einem Flachprofil hergestellt sind und einen Verbindungspilzkörper (41, 51) und einen sich an diesen anschließenden Verbindungsstilkörper (42, 52) aufweisen.

16. Beschlagsystem nach einem der Ansprüche 1 bis 15, **dadurch gekennzeichnet, daß** die Antriebselemente Antriebsstangenelemente (3) sind.

17. Beschlagsystem nach einem der Ansprüche 1 bis 16, **dadurch gekennzeichnet, daß** das Antriebsstangenelement (3) mit wenigstens einer Eckumlenkung (7, 8), die wenigstens ein weiteres Verbindungselement (73, 83) aufweist, als weiteres Betätigungs-Funktionselement verbindbar ist.

18. Beschlagsystem nach Anspruch 17, **dadurch gekennzeichnet, daß** jeweils zwischen einem Stulpeneinsatzkörper (1) und einer Eckumlenkung (7, 8) wenigstens ein Treibstangenkoppelkörper (9) angeordnet ist.

19. Beschlagsystem nach Anspruch 17 oder 18, **dadurch gekennzeichnet, daß** die Eckumlenkungen (7, 8) Riegelvorsprünge (73, 83) als Treibstangenverbindungselemente aufweisen.

20. Beschlagsystem nach einem der Ansprüche 16 bis 19, **dadurch gekennzeichnet, daß** die Antriebsstangenelemente (3) ausgebildet sind als
- ein Langantriebsprofilelement (31), in dem in einem Verbindungskörperabstand (37) mehrere Verbindungskörperausnehmungen (35) eingebracht sind,
- ein Kurzantriebsprofilelement (32), in dem in dem Verbindungskörperabstand (37) zwei Verbindungskörperausnehmungen (35) eingebracht sind,
- ein Adapterprofilelement (33), in dem in einem Adapterabstand (38) eine Verbindungskörperausnehmung (35) und eine Riegelvorsprungsausnehmung (36) angeordnet sind,
- ein Eckumlenkungsantriebsprofilelement (34), in dem in einem Riegelkörperabstand (39) zwei Riegelvorsprungsausnehmungen (36) angeordnet sind.

## Claims

1. A system of fittings for a leaf frame (10) of a turn-tilt window or a turn-tilt door for incorporation in at least one fitting groove portion (110), comprising at least the following parts:
- at least one actuating functional element (4, 5, 6, 7, 8),
- a faceplate braced against a groove base surface element (113) in the fitting groove portion (110) and
- a positioning bar connected to at least one actuating functional element (4, 5, 6, 7, 8), wherein at least one of the actuating functional elements (4, 5, 6, 7, 8) projects from at least one motion-permitting recess in the faceplate and is movably connected to the positioning bar,
**characterised in that**
- the faceplate is a profile (11, 16, 91) formed with at least one motion-permitting recess (13, 93),
- the positioning bar comprises
• a support rail (21, 92) on which at least one actuating functional element (4, 5, 6, 7, 8) is disposed and extends through the faceplate motion-permitting recess (13, 93) and on which the support rail (21, 92) lying under the faceplate profile (11, 16, 91) is at least partly held, and
• at least one drive element (3) with at least one coupling element (35, 36) and
- the coupling element (35, 36) and the actuating functional element (4, 5, 6, 7, 8) are connectable and the drive element (3) can be at least partly placed on the faceplate profile (11, 16, 91) and all the actuating functional elements (4, 5, 6, 7, 8) are movable.

2. A system according to claim 1 with a faceplate insertion member (1) comprising at least:
- the faceplate profile (11, 16) braced against a base surface element (113) of the fitting groove portion (110), the profile being formed with at least two motion-permitting recesses (13), and
- a support rail (21)
• which is disposed under the faceplate profile (11, 16, 91) and
• on which at least one connecting element (4, 5) and one functional element (6) are disposed,
- wherein the functional element (6) projects through the first motion-permitting recess and the connecting element (4, 5) projects through the second motion-permitting recess and is connectable to at least one drive element (3) at least partly resting on the faceplate profile (11, 16) and is movable with at least one additional actuating functional element (7, 8).

3. A system according to claim 2, **characterised in that** a first and a second connecting element (4, 5) are spaced apart on the support rail (21) and the functional element (6) is disposed between the first and second connecting elements (4, 5), the elements being movable in a respective one of three motion-permitting recesses (13) formed in the faceplate profile (11).

4. A system according to any of claims 1 to 3 with a positioning-bar coupling member (3) comprising at least:
- a coupling faceplate profile (91) braced against a groove base surface element (113) of the fitting groove portion (110) and in which a coupling faceplate motion-permitting recess (93) is formed, and
- a coupling support rail profile (92)
• which lies under the coupling faceplate profile (91) and
• on which at least one connecting element (4, 5) is disposed,
- wherein the connecting element (4, 5) projects through the coupling faceplate motion-permitting recess (93) and is connectable to at least one drive element (3) resting at least partly on the faceplate profile (91) and is movable with at least one additional actuating functional element (7, 8).

5. A system according to claim 4, **characterised in that** a third and a fourth connecting element (4, 5) are spaced apart on the coupling support rail coupling profile (92) and are movable together in the coupling faceplate motion-permitting recess (93).

6. A system according to any of claims 1 to 5,
**characterised in that** the faceplate profile (11) can be fixed by at least one fixing element (14) and the coupling faceplate profile (91) can be fixed by at least one coupling fixing element (96).

7. A system according to claim 6, **characterised in that**
- the fixing elements (14) are disposed at a fixing spacing (45) and
- the coupling fixing elements (96) are disposed at a coupling fixing spacing (95).

8. A system according to claim 6 or 7,
**characterised in that** a spacer profile portion (12) is disposed at each end of the faceplate profile (11) and a fixing profile portion (141) is disposed on it parallel with the faceplate profile (11).

9. A system according to claim 8, **characterised in that** the spacer profile portions (12) are bent relative to the faceplate profile (11).

10. A system according to any of claims 1 to 7,
**characterised in that** a box bottom profile element (18) is disposed parallel with the faceplate profile (16) and is connected to two spacer box elements (17) opposite one another, near which a respective fixing element (14) is disposed.

11. A system according to any of claims 1 to 10, **characterised in that** the positioning bar coupling member (9) and the faceplate insertion member (1) are each in the shape of a box with a bottom and a coupling box lid element and have the same fixing elements (14).

12. A system according to any of claims 6 to 11,
**characterised in that** the fixing element (14) is a fixing recess (142)
• formed in a fixing profile portion (141) or
• in the faceplate bar profile (16) and the box bottom profile element (18).

13. A system according to any of claims 6 to 12,
**characterised in that** the fixing element (14) is
- a mounting plate element (143),
- at least one mounting wedge element (144),
- at least one mounting centring element (145, 146) and/or
- a centring tip element (147), which is disposed on an underside of the lug profile element (141) or the box bottom profile element (18).

14. A system according to any of claims 1 to 12,
**characterised in that** the functional element (6) is
- a locking element (61),
- a mushroom-head element (62),
- a bracing ramp (63),
- a faulty operation-preventing element (64),
- a scissor element (65),
- a shift-locking element (66) or
- a transmission lock element (67).

15. A system according to any of claims 1 to 14, **characterised in that** all the connecting elements (4, 5) are made from a flat profile and comprise a connecting mushroom member (41, 51) and an adjoining connecting stile member (42, 52).

16. A system according to any of claims 1 to 15, **characterised in that** the drive elements are drive rod elements (3).

17. A system according to any of claims 1 to 16, **characterised in that** the drive rod element (3) is connectable to at least one corner deflector (7, 8) comprising at least one additional actuating functional element in the form of a connecting element (73, 83).

18. A system according to claim 17, **characterised in that** at least one positioning bar coupling member (9) is disposed between each faceplate insertion member (1) and a corner deflector (7, 8).

19. A system according to claim 17 or 18,
**characterised in that** the corner deflectors (7, 8) have positioning bar connecting elements in the form of bolt projections (73, 83).

20. A system according to any of claims 16 to 19,
**characterised in that** the drive rod elements (3) are in the form of
- a long drive profile element (31) formed with a number of connecting member recesses (35) at a connecting member spacing (37),
- a short drive profile element (32) formed with two connecting member recesses (35) at the connecting member spacing (37),
- an adapter profile element (33) formed with a connecting member recess (35) and a bolt projection recess (36) at an adapter spacing (38), and
- a corner deflector drive profile element (34) formed with two bolt projection recesses (36) at a bolt member spacing (39).

## Revendications

1. Ensemble de ferrures pour l'ouvrant (10) d'une fenêtre ou porte oscillo-battante, à monter dans au moins un tronçon de feuillure (110) et comportant au moins les pièces suivantes:
- au moins un organe fonctionnel de manoeuvre (4, 5, 6, 7, 8),
- une barre de têtière disposée en appui contre un élément de fond (113) à l'intérieur du tronçon de feuillure (110) et
- une crémone en liaison avec au moins un organe fonctionnel de manoeuvre (4, 5, 6, 7, 8), de telle sorte qu'au moins un de ces organes fonctionnels (4, 5, 6, 7, 8) dépasse d'au moins une lumière de mouvement ménagée dans la têtière et qu'il est mobile avec la crémone,
**caractérisé**
- **en ce que** la barre de têtière est un profilé de têtière (11, 16, 91) dans lequel est ménagé au moins une lumière de mouvement (13, 93),
- **en ce que** la crémone est composée
• d'une platine support (21, 92) sur laquelle est agencé au moins un organe fonctionnel de manoeuvre (4, 5, 6, 7, 8) passant à travers la lumière de mouvement (13, 93) et maintenant au moins partiellement la platine support (21, 92) située sous le profilé de têtière (11, 16, 91)
• et d'au moins un mécanisme de commande (3) comportant au moins un élément d'accouplement (35, 36)
- et dans lequel l'élément d'accouplement (35, 36) et l'organe fonctionnel de manoeuvre (4, 5, 6, 7, 8) peuvent être liés l'un à l'autre, que le mécanisme de commande (3) peut reposer au moins partiellement sur le profilé de têtière (11, 16, 91 ) et que les organes fonctionnels de manoeuvre (4, 5, 6, 7, 8) sont mobiles ensemble.

2. Ensemble de ferrures selon la revendication 1 comportant un corps de têtière (1) qui est constitué au moins :
- du profilé de têtière (11, 16) agencé en appui contre un élément de fond (113) du tronçon de feuillure (110), dans lequel profilé de têtière sont ménagés au moins deux lumières de mouvement (13)
- et d'une platine support (21)
• qui est situés sous le profilé de têtière (1 1 , 16, 91)
• et sur laquelle sont agencés au moins un organe de liaison (4, 5) et un organe fonctionnel (6).
et dans lequel l'organe fonctionnel (6) dépasse à travers la première lumière de mouvement et l'organe de liaison (4, 5) à travers la deuxième, et chacun desdits organes peut être lié à au moins un mécanisme de commande (3) reposant au moins partiellement sur le profilé de têtière (11, 16) et peut être mis en mouvement avec au moins un autre organe fonctionnel de manoeuvre (7, 8).

3. Ensemble de ferrures selon la revendication 2, **caractérisé en ce que** la platine support (21) porte un premier et un deuxième organes de liaison (4, 5) espacés l'un de l'autre, ainsi que l'organe fonctionnel (6) entre eux, chacun desdits organes étant mobile dans l'une des trois lumières de mouvement (13) ménagées dans le profilé de têtière (11).

4. Ensemble de ferrures selon l'une quelconque des revendications 1 à 3, comportant un corps de crémone d'accouplement (3) qui est constitué au moins :
- d'un profilé de têtière d'accouplement (91) disposé en appui contre un élément de fond (113) du tronçon de feuillure (110) et dans lequel est ménagée une lumière de mouvement (93)
- et d'une platine support d'accouplement (92)
• qui est située sous le profilé de têtière d'accouplement (91 )
• et sur laquelle est agencé au moins un organe de liaison (4, 5),
et dans lequel l'organe de liaison (4, 5) dépasse à travers la lumière de mouvement (93), peut être lié à au moins un mécanisme de commande (3) reposant au moins partiellement sur le profilé de têtière (91) et peut être mis en mouvement avec au moins un autre organe fonctionnel de manoeuvre (7, 8).

5. Ensemble de ferrures selon la revendication 4, **caractérisé en ce que** la platine support d'accouplement (92) porte un troisième et un quatrième organes de liaison (4, 5), espacés l'un de l'autre, qui sont conjointement mobiles dans la lumière de mouvement (93) ménagée dans la têtière.

6. Ensemble de ferrures selon l'une quelconque des revendications 1 à 5, **caractérisé en ce que** le profilé de têtière (1 1 ) peut être fixé par au moins un élément de fixation (14) et le profilé de têtière d'accouplement (91) par au moins un élément de fixation à accouplement (96).

7. Ensemble de ferrures selon la revendication 6, **caractérisé en ce que**
- les éléments de fixation (14) sont agencés avec un écart de fixation (45)
- et que les éléments de fixation à accouplement (96) sont agencés avec un écart de fixation à accouplement (95).

8. Ensemble de ferrures selon la revendication 6 ou 7, **caractérisé en ce qu'**il est agencé, à chacune des extrémités du profilé de têtière (11 ), un tronçon de profilé d'écartement (12) sur lequel est disposé -parallèlement au profilé de têtière (11)- un tronçon de profilé de fixation (141).

9. Ensemble de ferrures selon la revendication 8, **caractérisé en ce que** les tronçons de profilé d'écartement (12) sont disposés de manière à former un angle avec le profilé de têtière (11).

10. Ensemble de ferrures selon l'une quelconque des revendications 1 à 7, **caractérisé en ce qu'**il est agencé, parallèment au profilé de têtière (16), un profilé de fond en caisson (18) lié à deux écarteurs (17) qui se font face et au niveau desquels est agencé l'élément de fixation (14) correspondant.

11. Ensemble de ferrures selon l'une quelconque des revendications 1 à 10, **caractérisé en ce que** le corps de crémone d'accouplement (9) et le corps de têtière (1) sont configurés en forme de caisson, **en ce qu'**ils sont pourvus d'un fond de caisson et d'un couvercle d'accouplement et **en ce qu'**ils possèdent les mêmes éléments de fixation (14).

12. Ensemble de ferrures selon l'une quelconque des revendications 6 à 11, **caractérisé en ce que** l'élément de fixation (14) est une lumière (142) qui est ménagée
• dans un tronçon de profilé de fixation (141)
• ou dans le profilé de têtière (16) et le profilé de fond de caisson (18).

13. Ensemble de ferrures selon l'une quelconque des revendications 6 à 12, **caractérisé en ce que** l'élément de fixation (14) est constitué soit
- d'un élément d'appui bombé (143),
- d'au moins un cône d'appui (144),
- d'au moins un élément de centrage d'appui (145, 146)
- et/ou d'un élément de centrage en pointe (147)
qui est agencé sur un côté inférieur du profilé en éclisse (141) ou du profilé de fond (18).

14. Ensemble de ferrures selon l'une quelconque des revendications 1 à 12, **caractérisé en ce que** l'organe fonctionnel (6)
- constitue un élément de verrouillage (61),
- est en forme de tête de champignon (62),
- constitue un élément de butée et d'appui (63),
- constitue un élément de blocage en cas de fausse manoeuvre (64),
- constitue un élément de frottement (65),
- constitue un élément de blocage de commande (66)
- constitue une serrure du mécanisme (67).

15. Ensemble de ferrures selon l'une quelconque des revendications 1 à 14, **caractérisé en ce que** tous les organes de liaison (4, 5) sont fabriqués à partir d'un profilé plat et **en ce qu'**ils comportent un corps de liaison en forme de champignon (41, 51) et, adjacent à ce dernier, un corps de liaison en forme de tige (42, 52).

16. Ensemble de ferrures selon l'une quelconque des revendications 1 à 15, **caractérisé en ce que** les mécanismes de commandes sont des éléments de crémone (3).

17. Ensemble de ferrures selon l'une quelconque des revendications 1 à 16, **caractérisé en ce que** l'élément de crémone (3) peut être lié à au moins un élément d'angle (7, 8) qui comporte au moins un autre organe de liaison (73, 83), pour former un organe fonctionnel de manoeuvre supplémentaire.

18. Ensemble de ferrures selon la revendication 17, **caractérisé en ce qu'**il est agencé, respectivement entre un corps de têtière (1) et un élément d'angle (7, 8), au moins un corps de crémone d'accouplement (9).

19. Ensemble de ferrures selon la revendication 17 ou 18, **caractérisé en ce que** les éléments d'angle (7, 8) comportent des taquets de verrouillage (73, 83) en tant qu'organes de liaison avec la crémone.

20. Ensemble de ferrures selon l'une quelconque des revendications 16 à 19, **caractérisé en ce que** les éléments de crémone (3) sont configurés, respectivement, en tant que
- profilé long (31) de commande dans lequel sont ménagés, avec un espacement (37) entre elles, plusieurs lumières (35) pour des corps de liaison,
- profilé court (32) de commande dans lequel sont ménagées, avec un espacement (37) entre elles, deux lumières (35) pour des corps de liaison,
- profilé d'adaptateur (33) dans lequel sont ménagés, avec un espacement (38) entre elles, une lumière (35) pour un corps de liaison et une lumière (36) pour un taquet de verrouillage,
- profilé de commande (34) pour élément d'angle dans lequel sont ménagés, avec un espacement (39) entre elles, deux lumières (36) pour des taquets de verrouillage.
